(19) **Europäisches Patentamt European Patent Office Office européen des brevets**

(11) **EP 2 824 925 B1**

(12) **EUROPEAN PATENT SPECIFICATION**

(45) Date of publication and mention of the grant of the patent:
**27.02.2019 Bulletin 2019/09**

(51) Int Cl.:
*H04N 19/117* (2014.01)    *H04N 19/70* (2014.01)
*H04N 19/156* (2014.01)    *H04N 19/82* (2014.01)

(21) Application number: **14175345.9**

(22) Date of filing: **02.07.2014**

(54) **Video decoding with reduced-complexity deblocking**

Videodecodierung mit Deblocking mit verminderter Komplexität

Décodage vidéo à déblocage à complexité réduite

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.07.2013 CN 201310290392**

(43) Date of publication of application:
**14.01.2015 Bulletin 2015/03**

(73) Proprietor: **NXP B.V.**
**5656 AG Eindhoven (NL)**

(72) Inventors:
• **Li, Yan**
 **5656 AG Eindhoven (NL)**
• **Liu, Xiaobo**
 **5656 AG Eindhoven (NL)**
• **Cheng, Jiali**
 **5656 AG Eindhoven (NL)**

(74) Representative: **Miles, John Richard**
**NXP SEMICONDUCTORS**
**Intellectual Property Group**
**Abbey House**
**25 Clarendon Road**
**Redhill, Surrey RH1 1QZ (GB)**

(56) References cited:
**WO-A1-2013/034649    WO-A2-2008/033595**
**US-A1- 2008 137 752    US-A1- 2009 304 085**

**Description**

This invention relates to deblocking filtering during video decoding. In particular, it relates to deblocking for videos that have been encoded using deblocking within the prediction loop at the encoder. H.264 is one well known video compression standard which has this characteristic.

Compared with prior standards, such as MPEG-2, H.263, and MPEG-4, video coding using the H.264 standard improves compression ratios by 30%, on average. However, the decoding complexity for H.264 is also higher. In mobile phones and other portable electronic devices, H.264 is commonly decoded using a software decoder. Such software solutions typically do not perform as well as a hardware solution, in terms of speed. As a consequence, it remains difficult to play some sequences with high complexity and high bitrates smoothly, using a software decoder implementation, on platforms with limited CPU resources. This is especially true for bitstreams that use the "main" and "high" profiles defined by the H.264 standard.

US 20080137752 A1 describes a method of adaptively disabling deblock filtering of video information. US 20090304085 A1 describes an encoder to adaptively alter video deblocking complexity.

Commercial H.264 software decoders are already highly optimized. Therefore, there is little room for further improvement. In order to reduce the decoding time on an already highly optimized conformant H.264 decoder, the remaining possibility is to implement a faster H.264 decoder in non-conformant way. However, the risk associated with a non-conformant H.264 decoder is that it will lead to potential video artefacts (visible errors) that may not be acceptable to the viewer of the video.

According to an aspect of the present invention, there is provided a method of decoding a video comprising a plurality of frames according to claim 1.

The invention is set out in the appended set of claims; the further examples called embodiments in the description are illustrative examples, not embodiments claimed in the present application.

The inventors have recognised that it would be desirable to permit a scalable reduction in the complexity of the decoder, so that the best possible coding results could be obtained for any given amount of processing power. Embodiments of the present invention achieve this by applying the deblocking filter at some block-boundaries but not at others, within the same frame of the video. Skipping the deblocking step at some block-boundaries (even though deblocking was applied there by the encoder) means that - strictly - the video is decoded incorrectly. However, this may be acceptable if there is not enough processing power available to decode the video properly. In other words, decoding incorrectly may be better than failing to decode at all.

The inventors have also recognised that some block-boundaries may exhibit more serious blocking artefacts than others. According to embodiments of the invention, the deblocking process can be targeted to those blocks whose artefacts are more serious - for example, those which are more likely to be perceptible or disturbing to the viewer. Deblocking can preferably be skipped for blocks whose blocking-artefacts are likely to be less serious. In this way, a reduction in decoding-complexity can be achieved with less serious degradation in picture quality.

In a conventional, conformant H.264 decoder, the deblocking filter accounts for a significant part of the decoding time - typically about 20% to 30% of the time. Reducing complexity in the deblocking filter is therefore an effective way to make a H.264 decoder faster. However, according to the standard, the deblocking filter is a mandatory part of the H.264 decoder decoding loop, because it is inside the motion-compensation loop at the encoder. If deblocking is done in a non-conformant way in one frame, errors are introduced into this frame. Not only is the quality of this frame degraded, but the quality of other frames which reference this frame directly or indirectly is also degraded. This is due to error propagation and accumulation. These errors cannot be recovered until the next Instantaneous Decoder Refresh (IDR) frame is decoded.

According to aspects of the present invention, a modified deblocking process reduces the decoding-complexity while allowing graceful degradation in video quality.

The predictive algorithm is typically a motion compensation process, wherein the reference data comprises a previously decoded frame; or a spatial compensation process, wherein the reference data comprises an earlier decoded part of the same frame. These processes are sometimes referred to as "inter" prediction and "intra" prediction, respectively.

The encoding preferably comprises block-transform coding with spatial compensation and/or motion compensation. The deblocking filter is inside the spatial compensation or motion compensation loop. This would normally mean that the deblocking must be implemented at the decoder (that is, it is a normative, or mandatory, part of the coding standard). When the deblocking is not implemented at the decoder, the frames reconstructed by the decoder will be different from the frames encoded at the encoder.

Reconstructing a frame of the video typically comprises, for each block, decoding transform coefficients (including inverse quantising the coefficients); and performing an inverse block transform on the transform coefficients. If the frame was encoded predictively (for example, using motion compensation or spatial compensation, for a P-frame or a B-frame; or using spatial compensation only, for an I-frame), the result of the inverse transform is the prediction error. In this case, reconstructing the frame further comprises obtaining reference data that was used by the predictive algorithm for spatial- or motion-compensation for each block; obtaining spatial-prediction modes or motion vectors for each block; and applying the modes/vectors to the reference data to generate a prediction for each block. The predicted block is then combined with the prediction error to produce a reconstructed block. When all of the blocks have been reconstructed, together they form a reconstructed frame.

The reconstructed frame is preferably a reference frame, and the decoding method preferably further comprises using the partially deblocked reconstructed frame in the predictive algorithm to reconstruct another frame.

The present invention is particularly advantageous for decoding reference frames in circumstances where processing power is constrained. Reference frames are those used by the motion compensation algorithm to decode other frames. An error in a reference frame is therefore more problematic because it can propagate into the other frames subsequently decoded based on that reference frame. Embodiments of the present invention allow a reference frame to be decoded with limited processing power, while minimising the amount of error introduced into the reference frame.

Preferably, the second deblocking filter is applied at a boundary between two macroblocks and deblocking-filtering is skipped for block-boundaries within at least one of the macroblocks.

A macroblock is a group of blocks which have been encoded together. For example, all of the blocks in the macroblock may share the same motion vector. Each macroblock preferably comprises a luminance component and two chrominance components. In some embodiments, the luminance component of a macroblock may consist of 16 blocks, arranged in a 4 x 4 pattern. Each block may be 4 pixels wide by 4 pixels high, such that the luminance component of the macroblock contains 16 x 16 pixels. The macroblock may be defined according to the H.264 standard. The chrominance component of a macroblock may consist of 4 blocks, arranged in a 2 x 2 pattern. Each block may be 4 pixels wide by 4 pixels high, such that the chrominance component of the macroblock contains 8 x 8 pixels. This would be the case, for example, when the colour format is YUV 4:2:0.

The present inventors have recognised that more serious artefacts may be found at the boundaries between macroblocks than at the boundaries between blocks inside each macroblocks. Therefore, by choosing to apply deblocking only at macroblock boundaries, the most serious artefacts can hopefully be avoided, using the minimum amount of processing effort.

The method may comprise applying deblocking to a greater proportion of the block-boundaries when reconstructing the luminance component of a frame, compared with reconstructing the chrominance component of the same frame.

The present inventors have recognised that blocking artefacts in the luminance component of a frame tend to be more visible to a viewer than those in the chrominance component of a frame. Therefore, it is advantageous to concentrate the deblocking effort on the luminance component, as compared with the chrominance component.

This may comprise applying deblocking to all of the block-boundaries in the luminance component of a frame and only applying deblocking to a subset of the block-boundaries in the chrominance component (even though the encoder applied deblocking also to other block boundaries in the chrominance component). Alternatively, it may comprise only applying deblocking to a subset of the block-boundaries in the luminance component (even though the encoder applied deblocking also to other block boundaries in the luminance component) and skipping deblocking for the chrominance component.

The method may comprise applying deblocking to a greater proportion of the block-boundaries when reconstructing a reference frame, compared with reconstructing a non-reference frame. A reference frame is one which will be used by the predictive algorithm to decode at least one other frame. A non-reference frame is one which will not be used by the predictive algorithm to decode any other frames.

Concentrating processing power on deblocking in a reference frame means that errors/artefacts can be reduced in the reference frame and also any other frames which are decoded based on that reference frame.

The method may comprise: counting the number of successive reference frames for which deblocking has been skipped at some or all of the block-boundaries; detecting when this number exceeds a threshold; and in response, increasing the proportion of block-boundaries to which deblocking is applied when reconstructing a subsequent frame.

This can help to avoid a long sequence of frames with visible artefacts, by increasing the amount of deblocking performed when too many reference frames have been decoded with low quality.

The method may comprise applying deblocking to a greater proportion of the block-boundaries when reconstructing an intra-coded macroblock, compared with reconstructing an inter-coded macroblock.

The inventors have recognised that more significant blocking artefacts tend to occur in intra-coded blocks than inter-coded blocks. Therefore, it is advantageous to concentrate relatively more processing power on deblocking the intra-coded blocks.

The video is preferably encoded in conformance with the H.264 standard.

Deblocking is a normative part of the H.264 standard - that is, a deblocking filter is used at the encoder and the output of this filter is used to produce reference frames. This means that a conformant decoder cannot skip deblocking. The present invention is therefore particularly relevant for decoding H.264 video with reduced complexity.

The first deblocking filter and the second deblocking filter may be identical.

That is, for the block-boundaries where deblocking is performed, the decoder uses the same deblocking filter that was used at the encoder.

According to another aspect of the invention, there is provided a method of decoding a video comprising a plurality of frames, each of which has been encoded in a plurality of blocks of pixels, at least one frame comprising a deblocking correction at boundaries between adjacent encoded blocks,
the decoding method comprising:

> decoding the encoded blocks, to produce decoded blocks;
> reconstructing a frame of the video from the decoded blocks, to produce a reconstructed frame; and
> applying a deblocking filter to the reconstructed frame only at a subset of the block-boundaries which comprised the deblocking correction.

Here a "deblocking correction" means the effect of a deblocking filter. A frame comprising a deblocking correction means one which has been encoded with deblocking in the prediction loop.

According to still another aspect of the present invention, there is provided a method of decoding a video encoded in conformance with the H.264 standard, comprising:

> applying a deblocking filter at some block-boundaries in a reconstructed frame; and
> skipping deblocking for some other block-boundaries in the reconstructed frame, even though deblocking was applied at those block-boundaries by the encoder.

The method may comprise applying deblocking to a greater proportion of the block-boundaries when reconstructing the luminance component of a frame, compared with reconstructing the chrominance component of the frame.

The may comprise: counting the number of successive reference frames for which deblocking has been skipped at some or all of the block-boundaries; detecting when this number exceeds a threshold; and in response, increasing the proportion of block-boundaries to which deblocking is applied when reconstructing a subsequent frame.

The method may comprise applying deblocking to a greater proportion of the block-boundaries when reconstructing an intra-coded macroblock, compared with reconstructing an inter-coded macroblock.

Also provided is a computer program comprising computer program code means adapted to perform all the steps of any preceding claim when said program is run on a physical computing device, optionally embodied on a non-transitory computer readable medium.

According to a further aspect of the invention, there is provided video decoding apparatus adapted to decode a video comprising a plurality of frames, each of which was encoded in a plurality of blocks of pixels, which encoding used a predictive algorithm with deblocking inside the prediction loop, wherein a first deblocking filter was applied by the encoder at boundaries between adjacent blocks, and the output of the deblocking filter was used to provide reference data for the predictive algorithm,
the video decoding apparatus comprising:

> a frame reconstruction unit, adapted to reconstruct a frame of the video, to produce a reconstructed frame; and
> a deblocking-filter unit, adapted to:

>> apply a second deblocking filter at some block-boundaries in the reconstructed frame; and
>> skip deblocking-filtering at other block-boundaries in the reconstructed frame, even though deblocking was applied at those block-boundaries by the encoder, wherein the deblocking filter unit is further adapted to apply the second deblocking filter at a boundary between two macroblocks and to skip deblocking-filtering for block-boundaries within at least one of the macroblocks

The invention will now be described by way of example with reference to the accompanying drawings, in which:

> Fig. 1 is a generalised block diagram of a H.264 decoder;
> Fig. 2 illustrates a deblocking operation in a H.264 decoder;
> Fig. 3 shows the samples adjacent to a block-boundary in Fig. 2, which are affected by the deblocking filter; and
> Fig. 4 is a flowchart of a deblocking process according to an embodiment of the invention.

Examples of the present invention will be described with reference to the H.264 video coding standard. However, although the invention is particularly advantageous for decoding H.264 video, those skilled in the art will appreciate that it can also be beneficial for video that has been decoded using other coding standards, where deblocking has been applied in the motion-compensation process.

At the priority date of the present invention, the current version of the H.264 standard is defined in Recommendation ITU-T H.264 (04/2013). It is also noted that the same standard is published as ISO/IEC 14496-10 Information technology - Coding of audio-visual objects - Part 10: Advanced Video Coding, also known as MPEG-4 AVC. It is believed that the present invention is applicable to all versions of the H.264 / MPEG-4 AVC standard, and will continue to be applicable to all future versions, due to the requirement for all future versions to be backward-compatible with earlier versions.

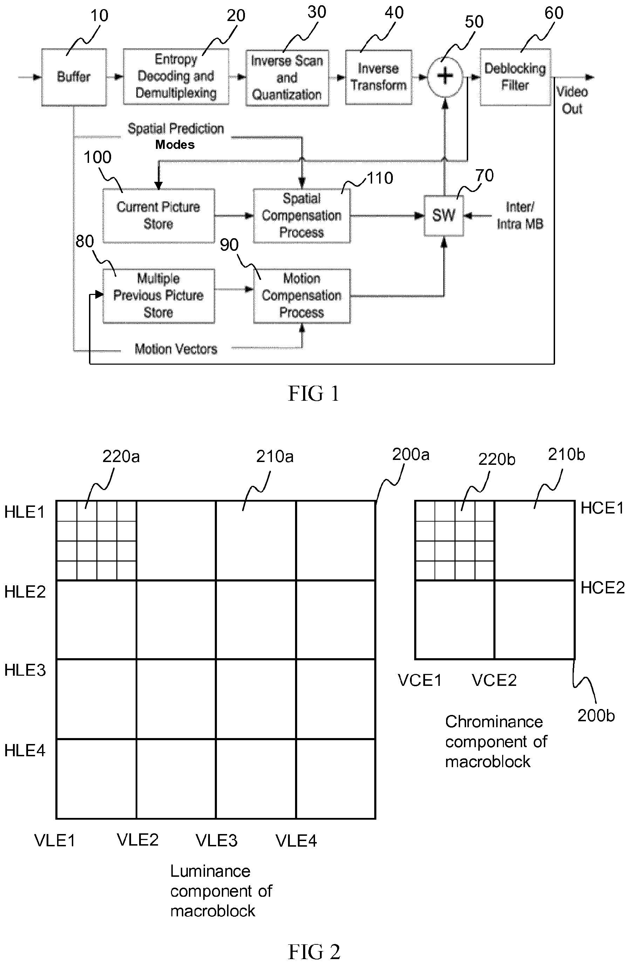

Fig. 1 is a block diagram of a H.264 decoder. The bitstream is received in a buffer 10, which buffers and parses it. Encoded transform coefficients are output from the buffer 10 to an entropy decoding and demultiplexing unit 20. The output of the entropy decoding and demultiplexing unit 20 is coupled to the input of an inverse scan and quantization unit 30. The output of the inverse scan and quantization unit 30 is coupled to the input of an inverse transform unit 40. The inverse transform unit 40 performs an inverse block transform on the decoded transform coefficients that are delivered to it by the inverse scan and quantization unit 30. The output of the inverse transform 40 is a prediction error comprising pixel values (luminance and chrominance). This is supplied to a first input of an adder 50.

Information for the predictive algorithm is output from the buffer 10 to the compensation loop. In particular, motion vectors are output to the motion compensation process unit 90 and information about spatial prediction modes is output to the spatial compensation process unit 110.

For intra coded macro blocks, the prediction is based on earlier decoded blocks of the current frame. These are stored in the current picture store 100. The output of the adder 50 is coupled to the input of the current picture store 100, for providing macroblocks to the current picture store after they are reconstructed. The spatial compensation process comprises predicting the content of a current block, based on the content of at least one of the earlier decoded blocks of the same frame. The spatial prediction mode information determines which of the earlier decoded blocks is used to predict the current block. For intra-coded macroblocks, the switch 70 selects the output of the spatial compensation process unit 110 and delivers it as a prediction to a second input of the adder 50.

For inter coded macroblocks, the prediction is based on at least one previously decoded frame. Previously decoded frames are stored in the multiple previous picture store 80. The motion compensation process comprises predicting the content of a block of the current frame, based on the content of an area of one of the previously decoded frames. Different blocks in the current frame may be predicted from different previous frames. The motion vectors determine which part of a previously decoded frame is used to predict the block in the current frame. For inter-coded macroblocks, the switch 70 selects the output of the motion compensation process unit 90 and delivers it as a predicted frame to the second input of the adder 50.

The output of the adder 50 is the sum of the prediction error and the predicted macroblock/frame. The output of the adder is a reconstructed macroblock/frame.

When all the macroblocks of a frame have been reconstructed, the complete reconstructed frame is supplied to the input of a deblocking filter 60, which performs deblocking at block-boundaries in the reconstructed frame. This will be described in detail below. The output of the deblocking filter 60 is output for display. It is also output to the multiple previous picture store 80, for use by the motion compensation algorithm when reconstructing other frames (using inter-prediction).

Together, the components 10, 20, 30, 40, 50, 70, 80, 90, 100, and 110 comprise a frame reconstruction unit, which is adapted to reconstruct a frame of the video to produce a reconstructed frame. The reconstructed frame is the output of the adder 50. The deblocking filter 60 is adapted to perform deblocking according to an embodiment of the invention.

Apart from the deblocking filter 60, the functionality of all components illustrated in Fig. 1 may be the same as a conventional H.264 decoder, which will be familiar to those skilled in the art. The functioning of the deblocking filter according to embodiments of the invention will be described in detail later below.

Relative to previous video coding methods, H.264 contains special features that make it compress video more effectively. One of the key features is to put the deblocking filter inside the coding loop and thereby make it a mandatory process at the decoder too. Conformant deblocking according to the H.264 standard will now be summarised briefly. H.264 applies an in-loop deblocking filter within the motion-compensated prediction loop in the encoder and decoder respectively, to provide an improvement in subjective and objective video quality. As shown in Fig. 1, the deblocking filter is performed after the completion of the picture reconstruction process. In a conformant H.264 decoder, the deblocking can affect all block boundaries of a processed macroblock (including the boundaries between macroblocks).

The deblocking filter is applied to luminance and chrominance components separately. The filter is applied to all block edges of the frame (except at the boundary of the frame). The deblocking filter is applied macroblock by macroblock, in raster-scan order. The filtering performed for an exemplary macroblock (MB) is shown in Fig. 2. The deblocking filter is described in the H.264 standard and in Raja and Mirza ("In-Loop Deblocking Filter for JVT H.264/AVC", In ISPRA'06: Proceedings of the 5th WSEAS International Conference on Signal Processing, Robotics and Automation, pages 235-240, Stevens Point, Wisconsin, USA, 2006. World Scientific and Engineering Academy and Society (WSEAS), Gulistan Raja and Muhammad Javed Mirza).

Fig. 2 shows the luminance component 200a of a macroblock, consisting of 16 blocks 210a arranged in a 4 x 4 pattern. Both the blocks and the macroblock are square. Each block is consists of 16 pixels 220a, in a 4 x 4 pattern. Therefore, the luminance component 200a of the macroblock consists of 16 x 16 = 256 pixels. Also shown is the chrominance component 200b of the macroblock. This consists of 4 blocks 210b in a 2 x 2 pattern. Each block 210b consists of 16 pixels 220b in a 4 x 4 pattern. Therefore, the chrominance component 200b of the macroblock consists of 8 x 8 = 64 pixels. For convenience and clarity the pixels are only drawn in the top left block of each macroblock-component.

The vertical boundaries between blocks in the luminance component are filtered firstly - that is, VLE1, VLE2, VLE3, and VLE4, in Fig. 2. Then, the horizontal boundaries between blocks of the luminance component are filtered - that is, HLE1, HLE2, HLE3, and HLE4. Finally, the boundaries between blocks in the chrominance component are filtered in a similar order to those of the luminance component - that is VCE1 and VCE2 followed by HCE1 and HCE2. Here, VLE stands for "vertical luminance edge", HLE stands for "horizontal luminance edge", VCE stands for "vertical chrominance edge", and HCE stands for "horizontal chrominance edge". VLE1 and HLE1 (and similarly VCE1 and HCE1) are the boundaries between macroblocks. The other block-boundaries are between blocks inside the same macroblock.

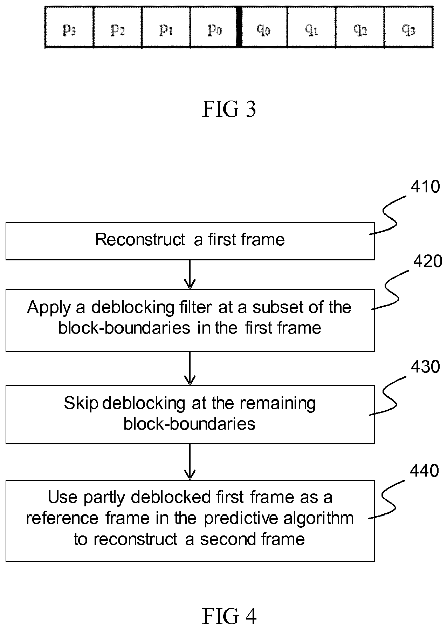

The four pixels at either side of the boundary between two blocks are illustrated in Fig. 3. The deblocking filter affects at most three samples on either side of boundary - that is, p0, p1, p2 and q0, q1, q2.

The operation of the conformant deblocking filter can be divided into three main steps as follows: filter strength computation; filter decision; and filter implementation, as described by Raja and Mirza. The Boundary Strength (BS) of the deblocking filter depends on several factors, including the values of the quantized transform coefficients decoded from the video bitstream, the type of macroblock, the Motion Vectors (MV) of the respective blocks, and the gradient of the pixel values across the boundary. This is explained in greater detail in Table1. The BS is derived for each edge (boundary) between neighbouring luminance blocks. Each block is 4 pixels wide and 4 pixels high. The BS value for the chrominance edges (boundaries) is not calculated independently - the BS derived for the corresponding luminance boundary is used also for the chrominance component. The BS is used to select the parameters of the deblocking filter and to control the filter strength.

**Table 1: Conditions for determining BS**

| Condition | BS |
| --- | --- |
| Block p or q is intra coded && block boundary is also a MB boundary | 4 |
| Block p or q is intra coded | 3 |
| Block p or q has one or more non-zero transform coefficients | 2 |
| Blocks p and q use different MVs | 1 |
| Blocks p and q use different reference frames | 1 |
| All other cases | 0 |
| In Table 1, "&&" refers to a logical AND operation. | |

The value of BS is an integer from 0 to 4. When the value of BS is equal to zero (BS=0), the filtering is skipped. Even if the value of BS is bigger than zero (BS>0), the deblocking filtering is performed at the block boundary only if following conditions are also all true:

$$| p0 - q0 | < \alpha$$

$$| p1 - p0 | < \beta$$

$$| q1 - q0 | < \beta$$

The values of the thresholds $\alpha$ and $\beta$ are dependent on the values of the quantization coefficients. For boundaries which require deblocking, according to these rules, either of two types of filter can be applied. When the value of BS is 1 to 3 (0<BS<4), p0 and q0 are filtered using a 4-tap filter and then clipped by quantization coefficient dependent functions.

The p1 and q1 of luminance component are conditionally filtered. When the value of BS is equal to 4 (BS=4), a filter is selected according to different constraint conditions. This filter can have a varying numbers of taps (3-tap, 4-tap, or 5-tap). The value of p2, p1, p0, q0, q1 and q2 may be revised. As mentioned previously, detailed information about the deblocking filter can be found in Raja and Mirza, cited above.

According to an embodiment of the present invention, the H.264 deblocking filter 60 is modified to reduce the amount of computation needed at the decoder, while preserving picture quality as much as possible. Since the deblocking filter accounts for a significant portion of H.264 decoding time, (about 20%, typically) reducing the amount of computation in the deblocking filter is an advantageous way to make the H.264 decoder faster. However, as explained previously above, the deblocking filter in H.264 decoder is an in-loop filter. If the deblocking filter is modified for one frame, not only is the quality of that frame degraded, but the quality of any other frames which refer that frame directly or indirectly is also degraded, due to error propagation and accumulation. These errors cannot be recovered until an IDR frame occurs.

In particular, according to one embodiment of the invention, deblocking is performed only at the boundaries of macroblocks (MBs) - and not at the boundaries of blocks within each MB. That is, the non-conformant filter, unlike the conformant H.264 deblocking filter, is only performed on block boundaries which are MB boundaries. Deblocking is skipped at other block boundaries. This will be referred to by the name "MB boundary deblocking filter".

Referring to Fig. 2, deblocking filters are performed at boundaries VLE1 and HLE1 of the luminance component of the macroblock and at boundaries VCE1 and HCE1 of the chrominance component of the macroblock. Deblocking filters are skipped for VLE2, VLE3, VLE4, HLE2, HLE3, HLE4, VCE2 and HCE2. In VLE1, HLE1, VCE1 and HCE1, the operation of filter follows the same procedure as the normal, conformant deblocking filter and includes the same three steps: filter strength computation; filter decision; and filter implementation (as explained already above).

This approach was tested using 15 test streams. The stream contents include a rugby game and a news-broadcast. Baseline, main profile, and high profile streams were all included among the test streams. The resolutions of the streams were 720x480 and 1280x720. The bitrates varied from 1Mbps for a 720x480 bitstream to 4Mbps for a 1280x720 stream. A commercial H.264 decoder was used for testing. The results of computation time come from testing on mobile phone. The model of phone used was a GT-19100 made by Samsung. This is a dual core platform with a main frequency of 1.2GHz. The software version was Android 2.3.3.

Using the MB boundary deblocking filter according to the embodiment was found to reduce the computation-time needed for deblocking by 80% compared with the known, conformant deblocking filter. That is, the MB boundary deblocking filter takes only 20% of the time taken by the conformant filter. The Peak Signal-to-Noise Ratio (PSNR) of the MB boundary deblocking filter, according to the embodiment, was compared with that of the conformant deblocking filter, by examining the difference between the output YUV values of both filters. The average luminance PSNR value across the 15 streams was 42.92 compared with the output of commercial reference decoder. And the average chrominance Cb and Cr PSNR values were 53.35 and 53.26, respectively. The minimum luminance PSNR among the 15 streams was 30.67. And the minimum chrominance Cb and Cr PSNR were 40.99 and 39.39, respectively. These minimum PSNR values may be too low, in some cases. In subjective video quality tests, blocking artefacts could be seen in some frames after using the MB boundary deblocking filter. This is an unavoidable consequence of reducing the amount of computation so significantly.

Although the MB boundary deblocking filter according to the present embodiment can reduce the amount of computation while preserving picture quality to some extent, there may be cases where the picture quality is degraded too much. There is a trade-off between the amount of reduction in computation and the resulting picture quality. By way of example, it may be desired to play H.264 files with Main or High profile at 480P and 2Mbps in a portable device. In this case, it may be desired that the picture is not visibly different from the output of a conformant decoder and while the computation time of the deblocking filter is reduced by at least 50%.

Starting with the embodiment described above (MB boundary deblocking applied to all frames), a refinement is proposed in order to cope with specific quality/complexity requirements and manage the trade-off between computation and picture quality. This is called "compound deblocking mode selection" and it includes two aspects. The first aspect is to define different deblocking filter modes according to the amount of computation that they require and the resulting picture quality, as shown in Table 2. In one embodiment, there are three deblocking modes, labelled ID1, ID2, and ID3. As the value of mode ID increases from 1 to 3, the computation time decreases; however, picture quality also decreases.

**Table 2: Deblocking modes in non-conformant decoder**

| Mode ID | Deblocking Mode | Amount of Computation | Picture Quality |
|---------|-----------------|-----------------------|-----------------|
| 1 | Conformant deblocking filtering | Large | Good |
| 2 | MB boundary deblocking filter | Medium | Medium |
| 3 | Disable deblocking filter | None | Bad |

A video can be decoded by selecting a mixture of two or more of these modes. This is the second aspect of compound deblocking mode selection: selecting the deblocking mode according to the properties of each MB, as shown in Table 3. Note that the MB properties defined in Table 3 are different from the MB type defined in the H.264 standard. In the present example, there are 4 categories, based on various MB properties.

**Table 3: deblocking mode selection based on MB properties**

| Cat. | MB Property | Subclass | Selection of Deblocking Mode ID |
|---|---|---|---|
| 1 | Type of component containing current MB | L: Luminance<br>C: Chrominance | L<=C |
| 2 | Type of frame containing current MB | I: I frame<br>refF: Frame used for reference<br>nrefF: Frame not used for reference | I <= refF <= nrefF |
| 3 | Before decoding the frame that contains current MB, the number of frames used for reference and continuously using non-conformance deblocking | F0: frame's number less than MAX_N<br>F1: frame's number equal to MAX_N<br>(MAX_N represents the maximum number of frames allowed to be used as reference frames and continuously using non-conformant deblocking. MAX N is an integer greater than 0) | F0 <= F1 |
| 4 | Current MB type | Intra<br>Inter | Intra <= Inter |

In the rightmost column of Table 3, X<=Y means that the deblocking mode ID for frames of class X is set to be less than or equal to the deblocking mode ID for frames of class Y.

In Category 1, the deblocking mode ID for the luminance component of a macroblock is chosen to be lower than or equal to the mode ID for the chrominance component of the macroblock. This means that a greater proportion of the boundaries in the luminance component macroblock-component will have deblocking applied to them, as compared with the boundaries in the chrominance macroblock-component. This Category exploits the fact that the human visual system is more sensitive to luminance than chrominance; therefore, deblocking artefacts are less likely to be perceptible in the chrominance component. Based on this observation, according to Category 1, relatively less effort is invested in deblocking the chrominance component. Selecting the deblocking mode according to Category 1 can reduce computation time significantly, while video quality is degraded very little. For example, if the deblocking filter for chrominance component is completely disabled (mode ID = 3), then the average time taken in the deblocking filter is reduced by more than 15%. Although the PSNR of the chrominance component decreases by a value of about 4, as a result of this, blocking artefacts are not noticed in the subjective quality assessment due to the human visual system's lower sensitivity to chrominance.

In Category 2, because I-frames are referenced (directly or indirectly) most frequently to predict other frames, the deblocking mode ID for MBs in I-frames is chosen to be lower than or equal to reater than the deblocking mode ID for MBs in other types of frame. This means that a relatively greater proportion of block-boundaries in an I-frame have deblocking applied to them than for other types of frame.

Note that, in the present context, "directly" referencing an I-frame means that a predicted frame is generated by applying motion vectors to blocks of pixels in the I-frame. "Indirect" reference means that a frame that has been reconstructed by directly referencing the I-frame goes on to be used as a reference frame to reconstruct other subsequent frames. These subsequent frames are "indirectly" referenced to the I-frame, in the sense that errors in reconstructing the I-frame will propagate into these subsequent frames.

Generally, because there tend to be few I-frames in typical H.264 sequences, the average computation time is not significantly changed by treating I-frames differently. However, the luminance PSNR was found to improve by 2.33, on average, compared with an embodiment in which all types of frame use the MB boundary deblocking filter.

Continuing the discussion of Category 2, the MBs of other frames which may be used as reference frames are assigned a lower deblocking mode ID than non-reference frames, in order to reduce error propagation. This means that a relatively greater proportion of block-boundaries in these reference frames have deblocking applied to them than for other frames which are not used as reference frames.

In one example of applying deblocking according to Category 2, the deblocking mode ID for I-frames is set to be less than or equal to the deblocking mode ID for P-frames; and the deblocking mode ID for P-frames is set to be less than or equal to the deblocking mode ID for B-frames. Preferably, deblocking is applied to the same or a greater proportion of block-boundaries in an I-frame, as compared with a non-I-frame reference frame; and deblocking is applied to the same or a greater proportion of block-boundaries in a non-I-frame reference frame, compared with a non-reference frame.

In one specific example, the deblocking filter is disabled for frames that are not used as reference frames and MB boundary deblocking is applied to reference frames (including I-frames). This can be beneficial for sequences encoded using H.264 Main and High profiles (MP/HP), in particular, since there are many frames not used for reference. However, for baseline profile, the impact on computation time is smaller. On average, by disabling the deblocking filter in frames not used for reference, the time taken for the filtering operation decreases by 6.83% compared with an approach in which all frames use MB boundary deblocking. The luminance PSNR was found to decrease by only 0.36. Based on both PSNR data and subjective assessment, the picture quality shows very little difference.

In Category 3, in order to limit error accumulation and improve picture quality, the method ensures that a frame will be filtered with a high quality filter if a certain number of preceding consecutive reference frames has been filtered by a low quality filter. For example, a frame can be filtered by the conformant deblocking filter if a certain number of previous reference frames were filtered using a non-conformant deblocking filter. In one example, MAX_N is set equal to 5. The average computation time has no change. The average PSNR improved by only 0.59, but the minimum PSNR improved by more than 1 in one-third of the 15 testing sequences.

The H.264 conformant deblocking filter usually results in strong filtering in areas where there is significant blocking distortion at block-boundaries in intra-coded MBs. Therefore in deblocking mode selection principle, intra coded MBs are assigned a lower or equal deblocking mode ID than inter coded MBs, in order to achieve better picture quality. Thus, deblocking filtering is applied to a greater proportion of block-boundaries in an intra-coded macroblock, compared with an inter-coded macroblock. To put it another way, deblocking is skipped more often if the macroblock was encoded with motion prediction than if it was encoded using spatial prediction. In the present embodiment, the type of each macroblock determines how the macroblock boundaries at the top and left of that macroblock (VLE1, HLE1, VCE1, and HCE1, in Fig. 2) are filtered, as well as determining how the block-boundaries inside the macroblock are filtered. The macroblock boundaries to the bottom and right of the macroblock will be filtered according to the types of the macroblocks below and to the right, respectively.

According to the requirements of video quality and computational complexity in a given application, the system can select different deblocking modes based on the type of MB. For example, intra MBs may use the conformant H.264 deblocking filter; and inter MBs may use the MB boundary deblocking filter in reference frames. For non-reference frames, deblocking may always be skipped. In this example, the average PSNR was found to improve by 1.98 compared with an approach in which all MBs use the MB boundary deblocking filter, and the minimum PSNR was found to improve by more than 3 in one-third of the 15 testing sequences. Meanwhile, the average computation time increases only 0.86% due to much less intra MB than inter MB in frame used for reference.

For evaluation purposes, several "Groups" were defined, which combine various MB deblocking mode selections. The groups were defined as follows:

*Group 1:* deblocking mode 1 is applied on all MBs

*Group 2:* deblocking mode 1 is applied on luminance MBs and deblocking mode 3 is applied on chrominance MBs

*Group 3:* deblocking mode 3 is applied on chrominance MBs,
for luminance MBs
If the frame including the MB is an I-frame or another reference frame then deblocking mode 1 is applied
Else (non reference frame) deblocking mode 3 is applied.

*Group 4:* deblocking mode 3 is applied on chrominance MBs,
for luminance MBs
If the frame including the MB is an I frame then deblocking mode 1 is applied
If the frame including the MB is a non reference frame then deblocking mode 3 is applied
Else (non-I-frame reference frame)

If frame_number = MAX_N then deblocking mode 1 is applied
Else (frame_number < MAX_N)

If MB is intra MB then deblocking mode 1 is applied
Else (MB is inter MB) then deblocking mode 2 is applied

*Group 5:* deblocking mode 3 is applied on chrominance MBs,
for luminance MBs
If the frame including the MB is an I frame then deblocking mode 1 is applied
If the frame including the MB is a non reference frame then deblocking mode 3 is applied
Else (non-I-frame reference frame)

     If MB is intra MB then deblocking mode 2 is applied
     Else (MB is inter MB) then deblocking mode 3 is applied

*Group 6*: deblocking mode 3 is applied on all MBs

The computation time and PSNR for each group are shown in Table 4. Only the PSNR for the luminance component is reported in Table 4, on the basis that the human visual system is less sensitive to chrominance than to luminance. Between group 2 and group 3, there is no difference in the amount of computation or PSNR for H.264 baseline profile sequences. When using group 5 or group 6, blocking artefacts occur in some frames of test streams. Consequently, group 4 represents a preferred embodiment. The decoding time can be reduced by 12.4%, overall, for a case where the time taken by the conformant deblocking filter amounts to 20% of the total decoding time.

**Table 4: Computation time and PSNR for different deblocking filter groups**

| Group | Brief Description | | PSNR Y | | Computation |
| --- | --- | --- | --- | --- | --- |
| | | | *Avg* | *Min* | *Time compared with conformant deblocking filter* |
| 1 | Conformant deblocking filter | | N/A | N/A | 100% |
| 2 | Disable deblocking filter in chrominance | | N/A | N/A | 75.58% |
| 3 | Disable deblocking in chrominance and non reference frames | | 76.96 | 43.51 | 44.28% |
| 4 | Disable deblocking in chrominance and non reference frames; MB boundary deblocking filter in inter MBs; Conformant deblocking filter in intra MBs; Every 5 reference frames do conformant deblocking filter once | | 47.53 | 32.59 | 37.87% |
| 5 | Disable deblocking in chrominance frames, non reference frames, and inter MB of reference frames; MB boundary deblocking filter in intra MBs of reference frames | | 42.99 | 28.88 | 22.45% |
| 6 | Disable deblocking filter | | 40.46 | 29.76 | 0 |

A method according to an embodiment of the invention is illustrated in the flowchart of Fig. 4. In step 410, a first frame is reconstructed. If the first frame is an I-frame, this will comprise inverse transforming block coefficients, in inverse transform unit 40, to reconstruct the prediction error. I-frames can only use intra prediction, not inter prediction. For blocks using intra prediction, the other input to adder 50 will be a predicted block, derived from an earlier-reconstructed block in the same frame. For blocks not using intra-prediction, the second input to the adder 50 will be zero. If the first frame is not an I-frame (for example, if it is a P-frame or B-frame), then either intra-prediction or inter-prediction may be used. Intra prediction is performed in the same way as for an I-frame. For blocks using inter-prediction, the block coefficients will be inverse transformed in the inverse transform unit 40, to obtain the prediction error. A predicted block will be generated using motion prediction, based on the motion vector for that block and the relevant reference frame. The adder 50 will add the predicted block to the prediction error to produce the reconstructed block. When all of the blocks have been reconstructed, they are combined to form a reconstructed frame.

In steps 420 and 430, deblocking is applied by the deblocking filter 60. Specifically, in step 420, the deblocking filter is applied at a subset of the block-boundaries of the first frame. The block-boundaries at which to apply deblocking are selected according to the principles described previously above. In step 430, deblocking is skipped at the other block-boundaries of the first frame, thereby reducing computational effort in the decoder.

In step 440, the output of the deblocking filter 60 is provided to the multiple previous picture store 80, for use in decoding inter-coded macroblocks of subsequent frames. Thereby, the (partly) deblocked first frame is used as a reference frame in the motion compensation algorithm, to reconstruct at least one other frame.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method of decoding a video comprising a plurality of frames, each of which was encoded in a plurality of blocks of pixels, which encoding used a predictive algorithm with deblocking inside the prediction loop, wherein a first deblocking filter was applied by the encoder at boundaries between adjacent blocks, and the output of the deblocking filter was used to provide a reference frame for the predictive algorithm,
the decoding method comprising:

   reconstructing a frame of the video, to produce a reconstructed frame;
   applying a second deblocking filter at some block-boundaries in the reconstructed frame; and
   skipping deblocking-filtering at other block-boundaries in the reconstructed frame, even though deblocking was applied at those block-boundaries by the encoder;
   **characterized in that** the second deblocking filter is applied at a boundary between two macroblocks and deblocking-filtering is skipped for block-boundaries within at least one of the macroblocks.

2. The method of claim 1, wherein the reconstructed frame is a reference frame, and the decoding method further comprises using the reconstructed reference frame in the predictive algorithm to reconstruct another frame.

3. The method of any preceding claim, comprising applying deblocking to a greater proportion of the block-boundaries when reconstructing the luminance component of a frame, compared with reconstructing the chrominance component of the frame.

4. The method of any preceding claim, comprising:

   counting the number of successive reference frames for which deblocking has been skipped at some or all of the block-boundaries;
   detecting when this number exceeds a threshold; and
   in response, increasing the proportion of block-boundaries to which deblocking is applied when reconstructing a subsequent frame.

5. The method of any preceding claim, comprising applying deblocking to a greater proportion of the block-boundaries when reconstructing an intra-coded macroblock, compared with reconstructing an inter-coded macroblock.

6. The method of any preceding claim, wherein the video is encoded in conformance with the H.264-AVC standard.

7. The method of any preceding claim, wherein the first deblocking filter and the second deblocking filter are identical.

8. A computer program comprising computer program code means adapted to perform all the steps of any preceding claim when said program is run on a physical computing device.

9. A computer program as claimed in claim 8 embodied on a non-transitory computer readable medium.

10. Video decoding apparatus adapted to decode a video comprising a plurality of frames, each of which was encoded in a plurality of blocks of pixels, which encoding used a predictive algorithm with deblocking inside the prediction loop, wherein a first deblocking filter was applied by the encoder at boundaries between adjacent blocks, and the output of the deblocking filter was used to provide a reference frame for the predictive algorithm, the video decoding apparatus comprising:

a frame reconstruction unit, adapted to reconstruct a frame of the video, to produce a reconstructed frame; and a deblocking-filter unit, adapted to:

apply a second deblocking filter at some block-boundaries in the reconstructed frame; and skip deblocking-filtering at other block-boundaries in the reconstructed frame, even though deblocking was applied at those block-boundaries by the encoder; **characterized in that** the deblocking filter unit is further adapted to apply the second deblocking filter at a boundary between two macroblocks and to skip deblocking-filtering for block-boundaries within at least one of the macroblocks.

## Patentansprüche

1. Verfahren zum Entschlüsseln eines Videos mit einer Mehrzahl von Frames, die jeweils in einer Mehrzahl von Pixelblöcken verschlüsselt wurden, wobei das Verschlüsseln einen Vorhersagealgorithmus mit einem Deblockieren im Inneren der Vorhersageschleife verwendet hat, wobei ein erster Deblockierfilter durch den Verschlüssler an Grenzen zwischen angrenzenden Blöcken angewendet wurde, und wobei der Ausgang des Deblockierfilters zum Bereitstellen eines Referenzframes für den Vorhersagealgorithmus verwendet wurde, wobei das Entschlüsselungsverfahren Folgendes aufweist:

Rekonstruieren eines Frames des Videos, um einen rekonstruierten Frame zu erzeugen; Anwenden eines zweiten Deblockierfilters an einigen Blockgrenzen in dem rekonstruierten Frame; und Überspringen eines Deblockierfilterns an anderen Blockgrenzen in dem rekonstruierten Frame, auch wenn ein Deblockieren an jenen Blockgrenzen durch den Verschlüssler angewendet wurde;

**dadurch gekennzeichnet, dass**

der zweite Deblockierfilter an einer Grenze zwischen zwei Makroblöcken angewendet wird und ein Deblockierfiltern für Blockgrenzen zumindest innerhalb eines der Makroblöcke übersprungen wird.

2. Verfahren gemäß Anspruch 1, wobei der rekonstruierte Frame ein Referenzframe ist und das Entschlüsselungsverfahren des Weiteren eine Verwendung des rekonstruierten Referenzframes in dem Vorhersagealgorithmus zum Rekonstruieren eines anderen Frames aufweist.

3. Verfahren gemäß einem der vorherigen Ansprüche, mit einem Anwenden eines Deblockierens auf einem größeren Anteil der Blockgrenzen beim Rekonstruieren der Luminanzkomponente eines Frames im Vergleich mit einem Rekonstruieren der Chrominanzkomponente des Frames.

4. Verfahren gemäß einem der vorherigen Ansprüche, mit:

Zählen der Anzahl von aufeinanderfolgenden Referenzframes, für die ein Deblockieren an einigen oder allen der Blockgrenzen übersprungen wurde; Erfassen, wann diese Anzahl einen Schwellwert überschreitet; und als Reaktion dessen Erhöhen des Anteils der Blockgrenzen, auf die ein Deblockieren angewendet wird, wenn ein nachfolgender Frame rekonstruiert wird.

5. Verfahren gemäß einem der vorherigen Ansprüche, mit einem Anwenden eines Deblockierens auf einen größeren Anteil der Blockgrenzen beim Rekonstruieren eines intrakodierten Makroblocks im Vergleich mit einem Rekonstruieren eines interkodierten Makroblocks.

6. Verfahren gemäß einem der vorherigen Ansprüche, wobei das Video in Konformität mit dem H.264-AVC Standard verschlüsselt ist.

7. Verfahren gemäß einem der vorherigen Ansprüche, wobei der erste Deblockierfilter und der zweite Deblockierfilter identisch sind.

8. Computerprogramm mit einer Computerprogramm-Codeeinrichtung, die dazu eingerichtet ist, alle Schritte von einem der vorherigen Ansprüche durchzuführen, wenn das Programm auf einer physikalischen Computervorrichtung läuft.

9. Computerprogramm gemäß Anspruch 8, das als ein nicht-flüchtiges, computerlesbares Medium ausgeführt ist.

10. Videoentschlüsselungsgerät, das daran angepasst ist, ein Video zu entschlüsseln, das eine Mehrzahl von Frames aufweist, die jeweils in einer Mehrzahl von Pixelblöcken verschlüsselt wurden, wobei das Verschlüsseln einen Vorhersagealgorithmus mit einem Deblockieren im Inneren der Vorhersageschleife verwendet hat, wobei ein erster Deblockierfilter durch den Verschlüssler an Grenzen zwischen angrenzenden Blöcken angewendet wurde, und wobei der Ausgang des Deblockierfilters zum Bereitstellen eines Referenzframes für den Vorhersagealgorithmus verwendet wurde,
wobei das Videoentschlüsselungsgerät Folgendes aufweist:

eine Framerekonstruktionseinheit, die daran angepasst ist, einen Frame des Videos zu rekonstruieren, um einen rekonstruierten Frame zu erzeugen; und
eine Deblockierfiltereinheit, die daran angepasst ist:

einen zweiten Deblockierfilter an einigen Blockgrenzen in dem rekonstruierten Frame anzuwenden; und
ein Deblockierfiltern an anderen Blockgrenzen in dem rekonstruierten Frame auch dann zu überspringen, wenn ein Deblockieren an jenen Blockgrenzen durch den Verschlüssler angewendet wurde;

**dadurch gekennzeichnet, dass**

die Deblockerfiltereinheit des Weiteren daran angepasst ist, den zweiten Deblockierfilter an einer Grenze zwischen zwei Makroblöcken anzuwenden und ein Deblockierfiltern für Blockgrenzen zumindest innerhalb eines der Makroblöcke zu überspringen.

## Revendications

1. Procédé de décodage d'une vidéo comprenant une pluralité de trames, dont chacune a été codée dans une pluralité de blocs de pixels, lequel codage a utilisé un algorithme prédictif avec dégroupage à l'intérieur de la boucle de prédiction, un premier filtre de dégroupage ayant été appliqué par l'encodeur à des limites entre blocs adjacents, et la sortie du filtre de dégroupage ayant été utilisée pour fournir une trame de référence pour l'algorithme prédictif, le procédé de décodage comprenant :

la reconstruction d'une trame de la vidéo, pour produire une trame reconstruite ;
l'application d'un deuxième filtre de dégroupage à certaines limites de blocs dans la trame reconstruite ; et
l'omission du dégroupage-filtrage à d'autres limites de blocs dans la trame reconstruite, même si un dégroupage a été appliqué à ces limites de blocs par l'encodeur ;
**caractérisé en ce que** le deuxième filtre de dégroupage est appliqué à une limite entre deux macroblocs et le dégroupage-filtrage est omis pour des limites de blocs à l'intérieur d'au moins un des macroblocs.

2. Procédé de la revendication 1, la trame reconstruite étant une trame de référence, et le procédé de décodage comprenant en outre l'utilisation de la trame de référence reconstruite dans l'algorithme prédictif pour reconstruire une autre trame.

3. Procédé d'une quelconque revendication précédente, comprenant l'application d'un dégroupage à une plus grande proportion des limites de blocs lors de la reconstruction de la composante de luminance d'une trame, par rapport à la reconstruction de la composante de chrominance de la trame.

4. Procédé d'une quelconque revendication précédente, comprenant :

le comptage du nombre de trames de référence successives pour lesquelles le dégroupage a été omis à certaines ou toutes les limites de blocs ;
la détection du moment où ce nombre dépasse un seuil ; et

en réponse, l'augmentation de la proportion de limites de blocs auxquelles un dégroupage est appliqué lors de la reconstruction d'une trame suivante.

5. Procédé d'une quelconque revendication précédente, comprenant l'application d'un dégroupage à une plus grande proportion des limites de blocs lors de la reconstruction d'un macrobloc intra-codé, par rapport à la reconstruction d'un macrobloc inter-codé.

6. Procédé d'une quelconque revendication précédente, dans lequel la vidéo est codée conformément à la norme H.264-AVC.

7. Procédé d'une quelconque revendication précédente, dans lequel le premier filtre de dégroupage et le deuxième filtre de dégroupage sont identiques.

8. Programme informatique comprenant des moyens de code de programme informatique adaptés pour effectuer toutes les étapes d'une quelconque revendication précédente quand ledit programme est exécuté sur un dispositif informatique physique.

9. Programme informatique selon la revendication 8 matérialisé sur un support non transitoire lisible par ordinateur.

10. Appareil de décodage vidéo adapté pour décoder une vidéo comprenant une pluralité de trames, dont chacune a été codée dans une pluralité de blocs de pixels, lequel codage a utilisé un algorithme prédictif avec dégroupage à l'intérieur de la boucle de prédiction, un premier filtre de dégroupage ayant été appliqué par l'encodeur à des limites entre blocs adjacents, et la sortie du filtre de dégroupage ayant été utilisée pour fournir une trame de référence pour l'algorithme prédictif,
l'appareil de décodage vidéo comprenant :

une unité de reconstruction de trame, adaptée pour reconstruire une trame de la vidéo, pour produire une trame reconstruite ; et
une unité de filtre de dégroupage, adaptée pour :

appliquer un deuxième filtre de dégroupage à certaines limites de blocs dans la trame reconstruite ; et
omettre le dégroupage-filtrage à d'autres limites de blocs dans la trame reconstruite, même si un dégroupage a été appliqué à ces limites de blocs par l'encodeur ;

**caractérisé en ce que** l'unité de filtre de dégroupage est également adaptée pour appliquer le deuxième filtre de dégroupage à une limite entre deux macroblocs et pour omettre le dégroupage-filtrage pour des limites de blocs à l'intérieur d'au moins un des macroblocs.

FIG 1

Luminance
component of
macroblock

Chrominance
component of
macroblock

FIG 2

| $p_3$ | $p_2$ | $p_1$ | $p_0$ | | $q_0$ | $q_1$ | $q_2$ | $q_3$ |

FIG 3

```
                                                            410
┌──────────────────────────────────────────┐
│        Reconstruct a first frame           │
└──────────────────────────────────────────┘
                     │
                     ▼                          420
┌──────────────────────────────────────────┐
│  Apply a deblocking filter at a subset of the │
│     block-boundaries in the first frame    │
└──────────────────────────────────────────┘
                     │
                     ▼                          430
┌──────────────────────────────────────────┐
│       Skip deblocking at the remaining      │
│            block-boundaries                 │
└──────────────────────────────────────────┘
                     │
                     ▼                          440
┌──────────────────────────────────────────┐
│     Use partly deblocked first frame as a   │
│  reference frame in the predictive algorithm │
│        to reconstruct a second frame        │
└──────────────────────────────────────────┘
```

FIG 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080137752 A1

- US 20090304085 A1

**Non-patent literature cited in the description**

- **RAJA ; MIRZA.** In-Loop Deblocking Filter for JVT H.264/AVC. *ISPRA'06: Proceedings of the 5th WSEAS International Conference on Signal Processing, Robotics and Automation,* 2006, 235-240